# EUROPEAN PATENT APPLICATION

(11) **EP 2 197 080 A1**
(43) Date of publication of application: **16.06.2010**
(21) Application number: 08171035.2
(22) Date of filing: 09.12.2008
(51) Int. Cl.: H02G 15/184

(54) **Flexible joint with resistive field grading material for HVDC cables and method for connecting same to HVDC cables**

(71) Applicant: ABB Research Ltd., 8050 Zürich (CH)
(72) Inventor: Thomas, Christen, CH-5413, Birmenstorf (CH)
(74) Representative: ABB Patent Attorneys

(57) **Abstract**

A method for connecting two high voltage direct current cables (21) in a flexible cable joint is described, wherein each high voltage direct current cable comprises at least, from the inside to the outside, a central conductor (12), an adjacent circumferential cable inner semicon layer (1), an adjacent circumferential cable insulation layer (3), and an adjacent circumferential cable outer semicon layer (5). The method is including the steps of: a. connecting the conductors (12) of the two cables (21) in a cable joint; b. providing adjacent to the conductors (12) is circumferential joint inner semicon layer (2) connecting the cable inner semicon layers (1) of the two cables (21); c. providing at least one circumferential and contiguous layer (10) of field grading material connecting the cable outer semicon layer (5) with the joint inner semicon layer (2) and covering the cable insulation layer (3) of the corresponding cable (21); d. providing a circumferential joint insulation layer (4) around the layer (10) of field grading material and where appropriate around the joint inner semicon layer (2); e. providing a circumferential joint outer semicon layer (6) connecting the cable outer semicon layers (5) of the two cables (21). Furthermore joints made using such a method and uses of such a method are disclosed.

## Description

### TECHNICAL FIELD

The present invention relates to the area of joints for high voltage direct current cables (HVDC cables).

### BACKGROUND OF THE INVENTION

For the transmission of high voltage (typically in the range of several hundreds of kV) direct current (DC) specific types of cables have been developed which take the particular requirements associated with DC transmission into account. These cables are known as high voltage direct current cables (HVDC cables), and their structure comprises essentially the following elements from the inside to the outside:
- a conducting core or conductor, typically consisting of a multitude of individual copper or aluminium conductors, this conductor is the high-voltage (HV) element;
- a conductor screen ("semiconductor layer", normally called "semicon") which is usually made of an electrically conducting polymer layer, e.g. a polymer layer filled with carbon particles, the layer normally being called "inner semicon";
- an insulation layer typically made of cross-linked polymers such as polyethylene;
- an insulation screen which is usually made of an electrically conducting polymer layer, e.g. a polymer layer filled with carbon particles ("semiconductor layer"), this element is held on ground potential, the layer normally being called "outer semicon";
- shielding and protecting layers which essentially do not contribute to the actual insulation of the high-voltage (HV) element.

In such a conductor very often the inner semicon, the insulation layer and the outer semicon are provided as one single polymer layer which is made in an extrusion process, wherein the inner semicon layer and the outer semicon layer are made by providing the radially innermost and the radially outermost regions of this polymer layer with corresponding carbon black filler.

In contrast to alternating current electricity transport, where for the distribution of the electric field around high voltage parts differences in the dielectric constant of different insulating materials are crucial, which normally does not vary more than by a factor of 1-3 for the commonly used materials, in case of high voltage direct current transport not the dielectric constants of the insulating materials are decisive but the resistivities. The latter can vary by factors of 100 or more, necessitating a more careful analysis of the electric field distribution in particular in a situation where cables are connected in a way such that the insulation is not simply terminated in a cable termination element but has to be continued in a cable joint. The variation in the resistivity is particularly problematic in view of the fact that resistivities show a high temperature dependence and so the matching of resistivity of insulation materials is normally not possible for all temperatures.

Correspondingly therefore specific prefabricated cable joints have been developed for such HVDC cables which make sure that the distortions of the electric field distribution in the insulating material are small in order to avoid field enhancements and consequent electric breakdown.

In addition to that, in particular for flexible connections between HVDC cables it is known to use tape-based cable joining technology. Flexible joints for HVDC light cables are usually made by lapping and successively vulcanizing semi-conductive and insulating tapes around the cable. Later, the lead and polyethylene jacket sheaths, and the armouring are mounted. The joint-cable interface can have a conical shape.

Among other things, an important condition is that the electric field distribution in the interface region between the cable insulation material and the joint insulation material is as homogenous as possible. Currently, this is reached by matching the electrical properties of the joint insulation and the cable insulation as well as possible. In particular the resistivity ratio, which determines the field distribution in the cable joint region at DC voltages, is close to one. This requires a high quality and extremely well controlled process.

### SUMMARY OF THE INVENTION

One of the objects of the present invention is therefore to provide an improved cable joint for high voltage direct current (HVDC) cables, as well as methods for making same. The cable joint shall be flexible, typically it is tape wound.

The present invention in particular relates to a method for connecting two HVDC cables in a flexible cable joint, wherein each HVDC cable comprises, from the inside to the outside, a central conductor (more generally central electrode, typically a bundle of individual copper or aluminium conductors), an adjacent circumferential cable inner semicon layer (optional but normally present, typically a (Carbon black) filled polymer layer), an adjacent circumferential cable insulation layer, and an adjacent circumferential cable outer semicon layer (more generally an outer electrode layer in case of being structured to be a semicon layer for the ground potential typically a filled polymer layer). Further outside the cable structure may include additional layers such as shielding layers, mechanical protection layers and the like. This type of cables as such is known in the field of HVDC transmission.

The proposed method is specifically **characterised in that** it includes at least the following steps:
a. connecting the central electrode of the two cables;
c. providing at least one circumferential and contiguous layer of field grading material connecting the outer electrode layer with the central electrode and contiguously covering the cable insulation layer of the corresponding cable (the field grading material layer thereby separates the cable insulation and the joint insulation);
d. providing a circumferential joint insulation layer around the layer of field grading material;
e. providing a circumferential joint outer electrode layer connecting the cable outer electrode layers of the two cables.

As indicated above, normally and preferentially the cable structures include an inner semicon layer and the outer electrode is given as an outer semicon layer. In this case, normally the method includes the following steps
a. connecting the conductors of the two cables, preferably in a cable joint;
b. providing adjacent to the conductors a circumferential joint inner semicon layer connecting the cable inner semicon layers of the two cables;
c. providing at least one circumferential and contiguous layer of field grading material connecting the cable outer semicon layer with the joint inner semicon layer and covering the cable insulation layer of the corresponding cable in the region between the cable outer semicon layer and the joint inner semicon layer;
d. providing a circumferential joint insulation layer around the layer of field grading material and where appropriate around the joint inner semicon layer;
e. providing a circumferential joint outer semicon layer connecting the cable outer semicon layers of the two cables.

It should be noted that even in case that the cable structures include an inner semicon layer it is optionally also possible not to include above step b., the layer of field grading material can also directly contact the conductor and take over the function of the inner semicon layer. It should furthermore be noted that the outer semicon layer may be provided by an additional layer of field grading material.

One of the gists of the invention is therefore that when making a flexible cable joint connection care is taken that the distribution of electric field in the insulation layer is as homogeneous as possible. As pointed out above, currently this is reached by matching the electrical properties of the joint insulation and the cable insulation as well as possible. In particular the resistivity ratio, which determines the field distortion in the interface region, is adjusted to be close to one. If the resistivity ratio differs from one, the field is concentrated in the material with the higher resistivity. Because it is very difficult to control the resistivity of insulators, a very good control of the production process is required, and the tape is limited to a very specific material. Even if very specific materials are chosen the problem of the strong dependence of the resistivities on the temperature and the fact that under operating conditions the temperature normally varies over large ranges, remains.

If, as proposed in the present invention, a layer with comparatively lower resistance (here called field grading material, FGM) is placed in between the two insulators, such that it connects the two potentials (ground and HV, i.e. cable outer semicon layer and joint inner semicon layer or conductor), the potential along this layer is well defined. By this, the two insulators cable insulator and joint insulator are electrically decoupled for DC voltage. This leads to a homogeneous voltage drop, as is illustrated in the specific description below. This field grading material layer in particular largely allows to overcome the problems associated with the temperature dependences of the resistivities of different materials.

Indeed the field grading material has a resistance which is much lower than the resistance of the insulation layer, typically the resistance of the field grading material is a factor 50-1000 lower than the minimum resistance of the insulation materials of the cable or the joint. The field grading material can be a material the resistivity of which depends on the applied electric field, wherein this dependence can be linear or non-linear. As materials of this kind are known in the field, reference is for example made to WO 2004/038735, the content of which is expressly included into the present specification as concerns possible systems for the field grading material.

The proposed invention has the potential to make the severe process conditions easier, and to open the possibility to use a larger class of joint insulation tape materials. Furthermore, as the trend is to go to higher and higher voltage levels, it is likely to become unavoidable in the future to make the flexible joints more robust from an electrical or electro-thermal point of view.

In a first preferred embodiment of the present invention, for at least one of or all of the steps b., c., d., and/or e. a polymer based tape of the corresponding material is wound around the region to be joined or a polymer based sleeve is shifted or wrapped around the region to be joined.

Correspondingly, typically in step b. a tape made of conductive polymer material, e.g. cross-linked or crosslinkable polyethylene tape material which is filled with carbon black particles or the like, is used for making the circumferential joint inner semicon layer.

In step c. a tape made of the above-mentioned field grading material is used, this can again be a polymer based tape material, e.g. cross-linked or crosslinkable polyethylene, which is filled with corresponding particles leading to the field grading properties.

In step d. a tape can be used based on a polymeric material which is therefore highly resistive. Possible is again cross-linked or crosslinkable polyethylene tape.

In step e. again essentially the same type of tape can be used as in the above-mentioned step b.

Normally, after step e. the joint is vulcanised by applying heat and/or irradiation, leading to a cross-linked layer structure in the joint in which the inner semicon layer, the field grading material layer, the insulation layer as well as the outer semicon layer are contiguous and essentially free from air gaps and the like leading to optimum insulation and electric field conditions. Also possible is the application of typically circumferential radial pressure in the joint region in order to compact the structure, either in addition to or as an alternative to the above-mentioned vulcanisation.

According to a further preferred embodiment, in step c. a single circumferential and contiguous layer of field grading material connecting the cable outer semicon layer of the first conductor with the joint inner semicon layer on the one side and the cable outer semicon layer of the second conductor with the joint inner semicon layer on the other side completely covering the joint inner semicon layer in the joint region is applied. As mentioned above, the field grading material layer must connect the inner semicon layer (or more generally the inner electrode) and the outer semicon layer (or more generally the outer electrode) in the joint region. Correspondingly therefore, two individual and separate field grading material layer sleeves can be provided for each of the two cables to be connected, it is however also possible to have one single field grading material layer sleeve which correspondingly via the joint inner semicon layer connects the two outer semicon layers of the cables (in this case it is even possible to leave out the inner semicon layer of the joint).

A further preferred embodiment is **characterised in that** the section of the cable insulation layer which is covered by the layer of field grading material in step c. is shaped as a cone converging towards the respective terminal end of the respective cable. Correspondingly therefore in the joint two cones are provided, one for each cable, which are pointing towards each other in the joint region. To have this conical structure of the insulating portion of each of the cables has the advantage that when winding tape material in the step of forming the flexible joint there is no abrupt geometrical step which can lead to problems when not correctly positioning tape layers and which may lead to locations where discharge can take place. Preferably the angle (α) between an axial direction with respect to the axis of the conductor and the plane of this cone (at the position of the axial direction) is in the range of 5-45°, most preferably 10-20°.

Typically, prior to step a. each of the cables is prepared for the proposed method by carrying out wire stripping operations in the terminal regions.

This is preferably done in that prior to step a. each of the cables is prepared in that in the very terminal region of the cable the conductor is completely bared circumferentially (thus exposing the conductor material, i.e. the multitude of copper or aluminium conductors). Preferably the conductor is exposed over an axial length of at least 2-30 cm, most preferably over a length of 10-25 cm.

Optionally in an adjacent region further away from the terminal end of the cable, the cable inner semicon layer is bared, i.e. the outer surface of the cable inner semicon layer is exposed radially. Preferably this region where the outer surface of the cable inner semicon layer is exposed extends over an axial length of 0-10 cm, most preferably over a length of 0.5-5 cm.

Even further away from the terminal end of each of the cables, there is provided a further adjacent region, in which the cable insulation layer is shaped in an essentially conical shape as mentioned above converging towards the terminal end of the cable. In this conical region in the above-mentioned step c. the field grading material is covering this conical part in a contiguous manner. Typically for a radial thickness D of the insulation layer in the range of 0.5 - 4 cm, this conical section extends in an axial direction for a length of Z = D/tan(α).

Optionally in a further subsequent region the cable insulation layer is bared circumferentially, i.e. the insulation layer is completely exposed in a radial direction. This region preferably extends in an axial direction over a length of 0-10 cm, more preferably over a length of 0.5-5 cm.

Furthermore optionally in an even further subsequent region the cable outer semicon layer is bared, i.e. it is exposed in a radial direction, this among other reasons for allowing to contact with the field grading material layer in the above-mentioned step c.

As mentioned above, the field grading material used in step c. can be a polymer based resistive field grading material, for example in the form of a tape. Field grading material generally means that the material is able to reduce local electric field enhancements so that the electric field exceeds nowhere the breakdown strength thus eliminating the risk of electric breakdown. For a definition and possible materials see for example A. Roberts, Stress grading for high voltage motor and generator coils, IEEE Electrical Insulation Magazine, Vol 11, No 4, 1995, p. 26 or Qi et al, Engineering with non-linear dielectrics, IEEE Electrical Insulation Magazine, Vol 20, No 6, 2004, p. 27). According to a preferred embodiment, this field grading material is made of a polymeric matrix provided with a filler, wherein the filler comprises a field grading effective amount of particles of a semiconducting material having an energy bandgap larger than 0 eV and smaller than 5 eV, preferably ZnO or SiC, wherein said particles preferably have at least one dimension smaller than or equal to 100 nm, more preferably one dimension between 2-80 nm, even more preferably 5-50 nm and most preferably 5-30 nm.

The field grading material can be a linear or nonlinear resistive material. It can be placed, e.g., by winding a vulcanizing field grading material tape (e.g., a polymer containing SiC or ZnO fillers etc.) after the semicon tape for the inner semicon layer of the joint was wound, or by mounting a specially shaped vulcanizing tube prior to cable connection etc.. As a connection of ground and HV is important, there can also be different topologies as shown in more detail in the description further below.

According to a further embodiment of the invention, in step a. a sleeve or clamp, preferably a metallic sleeve or clamp is used into which each of the terminal ends of the conductors of the cables are shifted and fixed therein by positive engagement and/or form closure and/or closure by adhesive force. Fixation can be effected by mechanical connections such as clamping, bolting , nuts and bolts connections, screws and the like, and/or by providing adhesives. Also possible is the use of welding techniques and the making of a conductor weld between the two central electrodes.

A further preferred embodiment of the proposed method is **characterised in that** the cable inner semicon layer, the cable insulation layer and the cable outer semicon layer of one or of each of the cables are made of one single extruded polymer material. This polymer material is preferably cross-linked material, e.g. a cross-linked polyethylene material. Typically, the innermost region of this polymer material is provided with a conductive filler to form the inner semicon layer, the cable insulation layer is highly resistive, and the outermost region of this polymer material is provided with a conductive filler to form the outer semicon layer. The filler of the inner and the outer semicon layer can be provided by carbon black particles. Preferably the inner semicon layer has a thickness (in a radial direction) in the range of 0.5-2 mm, the cable insulation layer (in a radial direction) has a thickness D in the range of 5-40 mm, and the outer semicon layer (in a radial direction) has a thickness in the range of 0.5-3 mm.

Furthermore the present invention relates to a flexible cable joint connecting two HVDC cables, wherein each HVDC cable comprises at least, from the inside to the outside, a central conductor, an adjacent circumferential cable inner semicon layer, an adjacent circumferential cable insulation layer, and an adjacent circumferential cable outer semicon layer, obtainable or obtained in a method as described above.

According to a first preferred embodiment of such a flexible cable joint, the HVDC cables comprise, outside of the outer semicon layer, at least one of the following layers: swelling tape layer, lead alloy sheath layer, polyethylene jacket layer, tensile armor layer, preferably including galvanised steel wires, outer cover layer, aluminium laminate layer, metallic screen layer, preferably including copper wires.

Preferably, the outer diameter of the joint region is less than 15% larger than the outer diameter of the cables with all circumferential layers. More preferably the outer diameter of the joint region is not more than 10% larger or not more than 5% larger than the outer diameter of the cables or has essentially the same outer diameter as the cables, so the joint, in contrast to prefabricated stiff cable joints, is very slim and does not provide a bulging area in the region of the joint.

According to a further preferred embodiment, such a cable joint is tape wound and flexible meaning that the possible radius of curvature of the cable portion with the joint is between 5-20 times, preferably between 8 - 15, of the cable diameter. This allows good cable handling and e.g. to wind a cable with such a flexible cable joint onto a roll or a cable sheave without problems which is not possible using a prefabricated joint.

The present invention furthermore relates to the use of a method as described above for connecting two (not necessarily but possibly identical) HVDC cables comprising at least, from the inside to the outside, a central conductor, an adjacent circumferential cable inner semicon layer, an adjacent circumferential cable insulation layer, and an adjacent circumferential cable outer semicon layer, and optionally outside of the outer semicon layer at least one of the following layers: swelling tape layer, lead alloy sheath layer, polyethylene jacket layer, tensile armour layer, preferably including galvanised steel wires, outer cover layer, aluminium laminate layer, metallic screen layer, preferably including copper wires. This in particular leading to the formation of a flexible cable joint as mentioned above.

Further embodiments of the present invention are outlined in the dependent claims.

### SHORT DESCRIPTION OF THE FIGURES

In the accompanying drawings preferred embodiments of the invention are shown in which:
- Figure 1: is an axial cut through a prefabricated cable joint for HVDC cables;
- Figure 2: shows the electric field distribution in the transition region from the cable to the cable joint of a prefabricated cable joint;
- Figure 3: is a sketch of a flexible joint, wherein the tilted line indicates the interface between joint insulation and cable insulation;
- Figures 4, 5: are detailed cuts through a flexible joint according to the invention, wherein in Figure 4 a situation is shown where the central electrodes are connected using a clamp while in Figure 5 a situation is shown where the central electrodes are connected by a connector weld;

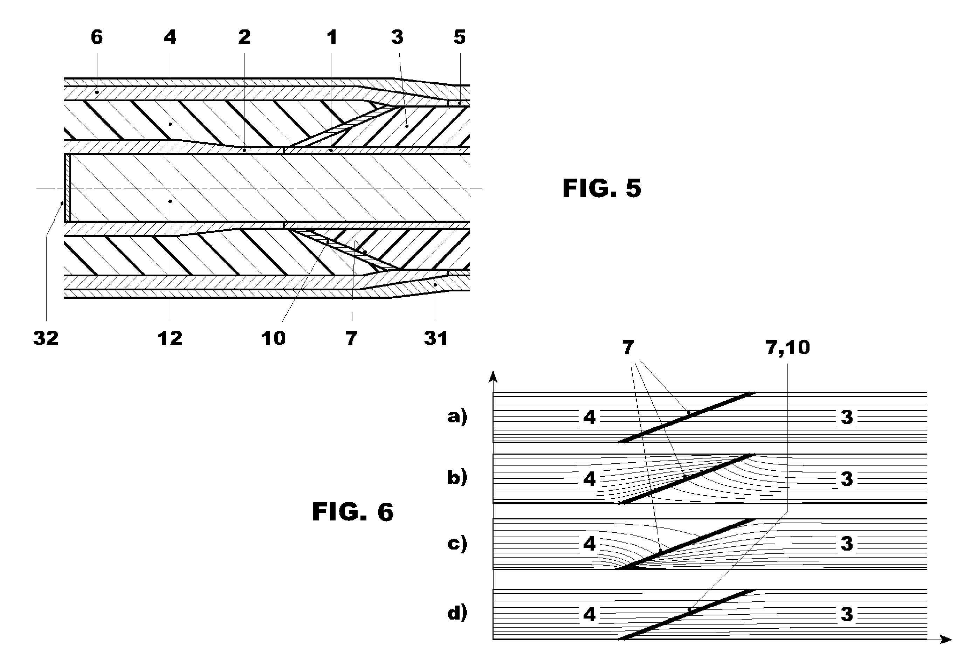

- Figure 6: shows the DC potential distribution in a flexible joint, wherein in a) the situation without field grading material layer assuming equal resistivities the insulation layers of the cable and the joint is given, in b) the situation without field grading material layer assuming a 10x higher resistivity of the joint insulation layer is given, in c) the situation without field grading material layer assuming 10x higher resistivity of the cable insulation layer is given, and wherein in d) the situation with a linear resistive field grading material layer is shown for differing resistivities of cable and joint insulation layers;
- Figures 7, 8: Figure 8 shows the DC electric fields along the line 11 plotted in the figure 7 for the cases a)-d) shown in Fig. 6, wherein the graph a) in figure 8 corresponds to the situation a) of figure 6, the graph b) in figure 8 corresponds to the situation b) of figure 6, the graph c) in figure 8 corresponds to the situation c) of figure 6 and the graph d) in figure 8 corresponds to the situation d) of figure 6; and
- Figures 9, 10: show two possibilities of field grading material topologies: Figure 9 fully going through, Figure 10 in two parts.

### DETAILED DESCRIPTION OF THE PREFERRED EMBODIMENTS

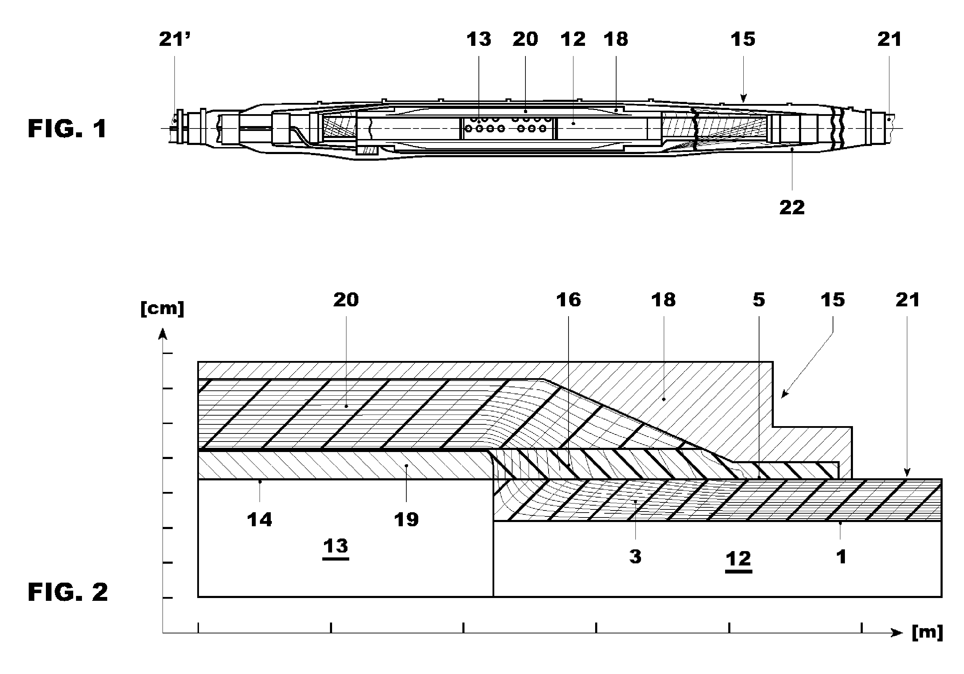

Referring to the drawings, which are for the purpose of illustrating the present preferred embodiments of the invention and not for the purpose of limiting the same, figure 1 shows, in an axial cut, a prefabricated cable joint for connecting high voltage direct current cables (HVDC cables) in a stiff manner.

In this respect it should be pointed out that there are principally two different types of connecting elements used in the field of HVDC cables, one of them being the so-called prefabricated or pre-moulded cable joints which, as the name says, prefabricated separate units which are adapted specifically to the cables to be connected. Prefabricated or pre-moulded cable joints are mounted or installed at the location where the cable is installed, i.e. due to their rigidity they cannot be used if the cable is to be wound on a cable sheave (cylindrical roll). On the other hand there is the so-called flexible or tape wound or tape moulded cable joints (also called flexible vulcanised joint or flexible factory joint), where there is no prefabricated separate joint unit but where the joint is made by normally connecting the central conductors and subsequently applying several layers of tape winding around for the formation of the actual joint. These flexible joints can also be used for cables which are to be reeled onto cable sheaves.

In this specific case of a prefabricated cable joint according to figure 1, two such HVDC cables 21 and 21' are joined in such a rigid prefabricated cable joint 15. To this end, the actual central conductor 12, by which a central electrode of the cable is formed, is exposed in the respective terminal region of the conductor 21, 21' and the two exposed or bared conductor portions are joined by means of a metallic connecting sleeve 13 into which from both sides the conductor portions are shifted and which is subsequently clamped to lead to a strong mechanical and electrical connection between the two conductors.

The prefabricated or pre-moulded cable joint comprises, in a housing 22, in the region surrounding the connecting sleeve an insulation part 20 and between the connecting sleeve and this insulation part 20 an inner conductive rubber part 19. Outside of the insulation part 20 there is provided an outer conductive rubber part 18.

The conditions which are, from an electrical point of view, relevant in the context of such a rigid cable joint according to figure 1, are indicated in figure 2. Figure 2 displays one of the two symmetrical half parts of figure 1 in a detailed view including the electrical field lines in the insulation material. As one can see, in the central region there is provided the connecting sleeve 13 (shown as elevation view in figure 2) in which the conductor 12 (shown as elevation view in figure 2) is mechanically fixed. Furthermore one can see that the conductor 12 of the cable is circumferentially surrounded by a cable insulation layer 3. Between the cable insulation layer 3 and the conductor 12 there is furthermore provided a cable inner semicon layer 1. At the outside of the cable insulation layer 3 there is provided a cable outer semicon layer 5.

The rigid cable joint parts are given by everything that is above line 14. Correspondingly therefore the rigid cable joint includes, in the region of the connecting sleeve, an inner conductive rubber part 19 and further radially outwards an insulation part 20. Axially adjacent to the inner conductive rubber part 19 there is provided a section of field grading material 16. This field grading material layer or section 16 connects the outer semicon layer 5 of the cable and the inner conductive rubber part 19 and does so in an axial direction. Radially outside of all this there is provided an outer conductive rubber part 18 of the rigid cable joint.

As one can conclude from the electric equipotential lines, which are indicated as well, the essentially axial field from the insulation part 3 of the cable coming from the right is essentially homogeneously diverted in a radial direction by means of the field grading material element 16 and are then smoothly redirected in an axial direction in a conically widening section of the insulation part 20 which is adjacent to the field grading material element 16.

The present invention now specifically relates to flexible cable joints.

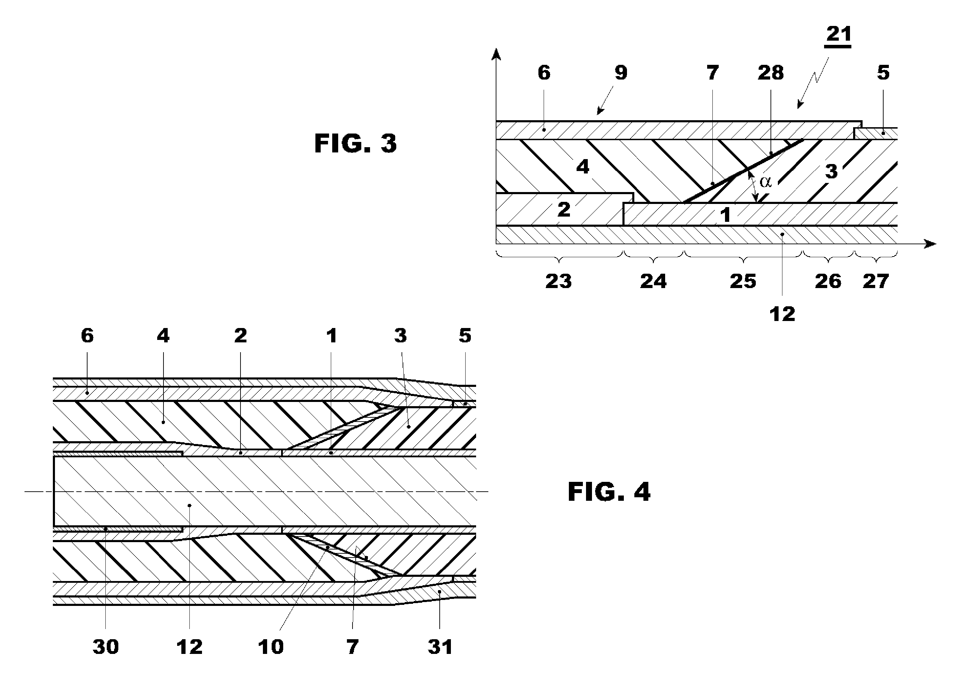

In these situations, the flexible cable joint is produced in that first the insulation of two cables in the terminal parts thereof is removed and subsequently the actual joint is produced by winding corresponding tapes in the joining region. This shall be illustrated by means of figure 3 which shows an axial cut again only of half of such a flexible cable joint in accordance with the present invention.

As a preparation for making such a flexible cable joint, the actual cable (coming from the right in figure 3) is stripped in the very terminal region 23 such as to expose the actual conductor 12. Then follows a region 24 where the cable inner semicon layer 1 is exposed in a radial direction, followed by region 25 where the cable insulation layer 3 is shaped as a cone 28, the tip of which points to the end of the cable. Preferably the angle α between the axial direction with respect to the axis of the conductor and the plane of this cone 28 (at the position of the axial direction) is in the range of 5-45°, preferably 10-20°. This conical section 25 is followed by the region 26 where the cable insulation layer 3 is exposed circumferentially and by a still further region 27 were the cable outer semicon layer 5 is exposed radially. The cable outer semicon layer 5 can more generally be described as an outer electrode layer 5. This prepared cable is then joined to a corresponding symmetrical cable (to be imagined on the left side), after having connected the conductors 12 by means of a connecting element (not shown in figure. 3, e.g. a sleeve as described above), in that first an inner joint semicon layer 2 is made by winding a corresponding tape material (typically a polyethylene tape) as indicated in figure 3, so in a manner such as to connect the cable inner semicon layers 1 of the two cables (as indicated further above, this layer may also be omitted and its function taken over by the field grading material layer). In the classical manner subsequently a different kind of tape material, i.e. non-filled tape material, is then used in a further step to make the joint insulation layer 4 by winding the tape material in the region as illustrated in figure 3 and in particular covering the interface 7 in the tilted or conical section 25 of the insulation layer. Subsequently again the same or a similar tape material as used for the layer 2, e.g. a carbon black filled tape is used for making the joint outer semicon layer 6 and this in a manner such as to connect the cable outer semicon layers 5 of the two cables. The joint outer semicon layer 6 can more generally be described as a joint outer electrode layer 6. Subsequent to these operations the whole joint is vulcanized by applying heat or by irradiation such as to form a solid unit and to fuse all the layers 2, 4 and 6 with the materials of the layers 1, 3 and 5.

If the two materials of the layers 3 and 4 have equal resistivities, such a cable joint leads to electric field distributions as illustrated in figure 6 a). This would essentially be the ideal situation, which however cannot be achieved as there is always differences between the resistivities of the extruded insulation layer 3 of cables and of the vulcanized tape insulation layer 4.

In practice therefore there will always be a difference in resistivity, and the consequence of such differences is illustrated in figures 6 b) and c), wherein in b) the situation is shown where the insulation layer 4 has a ten times higher resistivity than the insulation layer 3 of the cable, and in c) where the resistivity of the insulation layer of the cable is ten times higher than the resistivity of the insulation layer 4 of the joint. The corresponding distortions of the electric field lines are unacceptable in particular if higher voltages shall be applied.

If in the above-mentioned process of making such a joint prior to the application of the layer 4 a field grading material layer 10 (see figures. 4, 5, 9 and 10 ) is produced at the interface 7 as illustrated in figure 3 in a manner connecting either directly or indirectly the cable outer semicon layer 5 with the joint inner semicon layer 2, then problems can be mitigated and a rather homogenous electric potential distribution as illustrated in figure 6 d), in which the resistivities of the two sections 4 and 3 also differ by a factor of 10, can result.

Figures 4 and 5 show two different embodiments of the tape wound joint according to the invention in more detail. In both embodiments the inner semicon layer 1 is electrically connected to the joint outer semicon layer 6 by the field grading material layer 10. The field grading material layer 10 is located in the axial direction of the cable between the cable insulation layer 3 and the joint insulation layer 4. Hence, the interface 7 of the cable insulation layer 3 is continuously covered by the field grading material layer 10. The field grading material layer 10 is connected by the inner semicon layer 1 to the central electrode 12 and by the joint outer semicon layer 6 to the outer semicon layer 5 of the cable.

In figure 4 a flexible cable joint is shown in which the two central electrodes 12 are connected using a connector clamp 30 as the connecting element. Further structural elements of the flexible joint are designated using the same reference numerals as used in figure 3. Specifically indicated in this case is the peripheral cable/joint jacket layer 31 which may include also further shielding layers etc. In figure 5 the more commonly used way of joining the central conductors 12 in case of flexible joints is indicated, namely by means of a conductor weld 32.

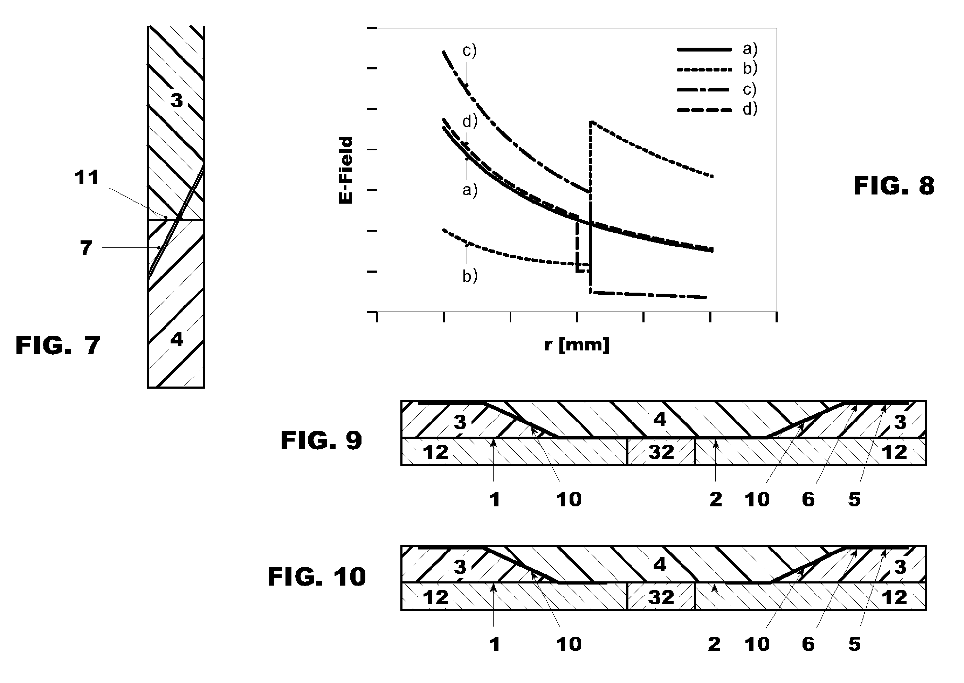

Indeed, as illustrated in figure 8, giving the electric field along the line 11 in the figure 7, one can see that in the ideal situation a) according to figure 6 one has a homogeneous and smooth electric field distribution without abrupt changes. In complete contrast however, in the real world situations b) and c) according to figures 6, one has dramatic steps at the interface between the two materials 3 and 4, leading to problems with discharge and the like. As one can see from the corresponding distribution illustrated with the line d) standing for the situation illustrated in figure 6, situation d), one has a smaller electric field in the region of the field grading material 10 (the dip at the radius of around 20 to 21 mm), due to the higher conductivity of the field grading material layer, however one has apart from that a smooth overall behaviour (i.e. without significant field enhancements) between the section in the material 3 and in the material 4.

The field grading material layers indicated with reference numeral 10 in figures 9 and 10 can be either applied for each of the cables individually as indicated in figure 10, i.e. two separate circumferential and contiguous sections of field grading material layers 10 for each cable and in the central region, essentially around the connecting element 32 connecting the two cable conductors 12, there is no field grading material layer but only the joint inner semicon layer 2. It is however also possible to have one single field grading material layer sleeve as illustrated in figure 9, i.e. in one step field grading material layer 10 tape is wound around the full length of the joint region connecting the two cable outer semicon layers 5 indirectly via the joint inner semicon layer 2 in the central region. The connecting element 32 is formed by the conductor weld. However, other connecting methods as discussed above are also possible, e.g. a conductor clamp 30 as shown in figure 4 or a connecting sleeve 13 as shown in figure 2.

### LIST OF REFERENCE NUMERALS

- 1: cable inner semicon
- 2: joint inner semicon
- 3: cable insulation, polymer layer
- 4: joint insulation, polymer layer
- 5: cable outer semicon, outer electrode layer
- 6: joint outer semicon or conductive rubber, joint outer electrode layer
- 7: interface between 3 and 4
- 9: joint
- 10: field grading material layer, FGM
- 11: line for display of E-field
- 12: cable conductor (central electrode)
- 13: connecting sleeve
- 14: inner surface of the prefabricated cable joint
- 15: prefabricated cable joint
- 16: field grading material element in the prefabricated joint
- 18: outer conductive rubber part of 15
- 19: inner conductive rubber part of 15
- 20: insulation part of 15
- 21: high voltage direct current cable
- 22: housing of 15
- 23: region where the conductor is stripped completely prior to joining
- 24: region where the cable inner semicon layer is bared prior to joining
- 25: region where the cable insulation layer is shaped in a conical manner prior to joining and where the field grading material is to be placed according to the present invention
- 26: region where the cable insulation layer is bared circumferentially prior to joining
- 27: region where the cable outer semicon layer is bared prior to joining
- 28: cone
- 30: conductor clamp
- 31: cable/joint jacket
- 32: conductor weld
- FGM: field grading material
- α: angle between axial direction and cone surface

## Claims

1. Method for connecting two high voltage direct current cables (21) in a cable joint, wherein each high voltage direct current cable comprises at least, from the inside to the outside, a central electrode (12), a circumferential cable insulation layer (3), and an outer electrode layer (5),
including the steps of:
a. connecting the central electrode (12) of the two cables (21);
c. providing at least one circumferential and contiguous layer (10) of field grading material connecting the outer electrode layer (5) with the central electrode (12) and contiguously covering the cable insulation layer (3) of the corresponding cable (21);
d. providing a circumferential joint insulation layer (4) around the layer (10) of field grading material;
e. providing a circumferential joint outer electrode layer (6) connecting the cable outer electrode layers (5) of the two cables (21).

2. Method according to claim 1, wherein each high voltage direct current cable comprises at least, from the inside to the outside, the central electrode as a central conductor (12), an adjacent circumferential cable inner semicon layer (1), an adjacent circumferential cable insulation layer (3), and the outer electrode layer as an adjacent circumferential cable outer semicon layer (5),
including the steps of:
a. connecting the conductors (12) of the two cables (21) in a cable joint;
b. providing adjacent to the conductors (12) a circumferential joint inner semicon layer (2) connecting the cable inner semicon layers (1) of the two cables (21);
c. providing at least one circumferential and contiguous layer (10) of field grading material connecting the cable outer semicon layer (5) with the joint inner semicon layer (2) and contiguously covering the cable insulation layer (3) of the corresponding cable (21);
d. providing a circumferential joint insulation layer (4) around the layer (10) of field grading material and where appropriate around the joint inner semicon layer (2);
e. providing a circumferential joint outer semicon layer (6) or field grading material layer connecting the cable outer semicon layers (5) of the two cables (21).

3. Method according to claim 1 or 2, wherein for at least one of or all of the steps b., c., d., and/or e. a polymer based tape of the corresponding material is wound around the region to be joined and/or a polymer based sleeve is shifted around the region to be joined.

4. Method according to any of the preceding claims, wherein after step e. the joint is vulcanised by applying heat and/or irradiation and/or is exposed to preferably radial pressure.

5. Method according to any of the preceding claims, wherein in step c. a single circumferential and contiguous layer (10) of field grading material connecting the outer electrode layer (5) or the cable outer semicon layer (5) of the first conductor (21) with the central electrode (12) or with the joint inner semicon layer (2) on the one side and the outer electrode layer (5) or the cable outer semicon layer (5) of the second conductor (21') with the central electrode (12) or with the joint inner semicon layer (2) on the other side completely covering the central electrode and/or the joint inner semicon layer (2) in the joint region.

6. Method according to any of the preceding claims, wherein the section of the cable insulation layer (3) which is covered by the layer (10) of field grading material in step c. is shaped as a cone (28) converging towards the respective terminal end of the respective cable (21, 21'), wherein preferably the angle (α) between an axial direction with respect to the axis of the conductor (12) and the plane of this cone (28) is in the range of 5-45°, preferably in the range of 10-20°.

7. Method according to any of the preceding claims, wherein prior to step a. each of the cables (21, 21') is prepared in that in the very terminal region (23) of the cable (21, 21') the inner electrode or the conductor (12) is completely bared circumferentially, preferably over a length of at least 2-30 cm, most preferably over a length of 10-25 cm, wherein optionally in a subsequent region (24) the cable inner semicon layer is bared, preferably over a length of 0-10 cm, most preferably over a length of 0.5-5 cm, wherein in a subsequent region (25) the cable insulation layer (3) is shaped in an essentially conical shape (28) converging towards the terminal end of the cable, wherein optionally in a subsequent region (26) the cable insulation layer (3) is bared circumferentially, preferably over a length of 0-10 cm, most preferably over a length of 0.5-5 cm, and wherein in a subsequent region (27) the cable outer electrode layer (5) or the outer semicon layer (5) is bared.

8. Method according to any of the preceding claims, wherein the field grading material used in step c. is a polymer based resistive field grading material made of a polymeric matrix provided with a filler, wherein preferably the filler comprises a field grading effective amount of particles of a semiconducting material having an energy bandgap larger than 0 eV and smaller than 5 eV, preferably ZnO or SiC, wherein said particles preferably have at least one dimension smaller than or equal to 100 nm, more preferably one dimension between 2-80 nm, even more preferably 5-50 nm and most preferably 5-30 nm.

9. Method according to any of the preceding claims, wherein in step a. a sleeve or clamp, preferably a metallic sleeve or clamp is used into which each of the terminal ends of the central electrode or of the conductors (12) of the cables (21, 21') are shifted and fixed therein by positive engagement and/or form closure and/or closure by adhesive force, and/or wherein in step a. the terminal ends of the central electrode are connected using welding techniques.

10. Method according to any of the preceding claims, wherein the cable inner semicon layer (1), the cable insulation layer (3) and the cable outer semicon layer (5) are made of one single extruded polymer material, preferably of cross-linked polyethylene material, wherein the innermost region of this polymer material is provided with a semiconducting filler to form the inner semicon layer (1), the cable insulation layer (3) is free of filler, and the outermost region of this polymer material is provided with a semiconducting filler to form the outer semicon layer (5), wherein preferably the inner semicon layer (1) has a thickness in the range of 1-3 mm, the cable insulation layer (3) has a thickness in the range of 5-40 mm, and the outer semicon layer (5) has a thickness in the range of 1-3 mm.

11. Cable joint connecting two high voltage direct current cables (21), wherein each high voltage direct current cable comprises, from the inside to the outside, a central conductor (12), optionally preferably an adjacent circumferential cable inner semicon layer (1), an adjacent circumferential cable insulation layer (3), and an adjacent circumferential cable outer electrode or semicon layer (5), obtainable or obtained in a method according to any of the preceding claims.

12. Cable joint according to claim 11, wherein the high voltage direct current cables (21) comprise, outside of the outer electrode layer or the semicon layer (5) at least one of the following layers: swelling tape layer, lead alloy sheath layer, polyethylene jacket layer, tensile armour layer, preferably including galvanised steel wires, outer cover layer, aluminium laminate layer, metallic screen layer, preferably including copper wires.

13. Cable joint according to any of claims 11 or 12, wherein the outer diameter of the joint region is less than 15% larger than the outer diameter of the cables (21, 21') with all circumferential layers, wherein preferably the outer diameter of the joint region is not more than 10% larger, more preferably not more than 5 % larger, than the outer diameter of the cables (21, 21') or has essentially the same outer diameter as the cables (21, 21').

14. Cable joint according to any of claims 10-12, wherein the possible curvature of the cable radius of the cable portion with the joint is between 5-20 times, preferably 8-15 times, of the cable diameter.

15. Use of a method according to any of claims 1-10 for connecting two high voltage direct current cables comprising, from the inside to the outside, a central conductor (12), optionally preferably an adjacent circumferential cable inner semicon layer (1), an adjacent circumferential cable insulation layer (3), and an adjacent circumferential cable outer electrode or outer semicon layer (5), and optionally outside of the outer semicon layer (5) at least one of the following layers: swelling tape layer, lead alloy sheath layer, polyethylene jacket layer, tensile armour layer, preferably including galvanised steel wires, outer cover layer, aluminium laminate layer, metallic screen layer, preferably including copper wires.
